(19) Europäisches Patentamt
European Patent Office
Office européen des brevets

(11) **EP 2 409 397 B1**

(12) **EUROPÄISCHE PATENTSCHRIFT**

(45) Veröffentlichungstag und Bekanntmachung des Hinweises auf die Patenterteilung:
**15.05.2013 Patentblatt 2013/20**

(21) Anmeldenummer: **10713817.4**

(22) Anmeldetag: **16.03.2010**

(51) Int Cl.:
*H02P 7/00* ^(2006.01)    *H02K 23/66* ^(2006.01)

(86) Internationale Anmeldenummer:
**PCT/EP2010/001634**

(87) Internationale Veröffentlichungsnummer:
**WO 2010/105794 (23.09.2010 Gazette 2010/38)**

(54) **AUTOMATISCHE ERKENNUNG EINES MECHANISCH KOMMUTIERTEN GLEICHSTROMMOTORS**

AUTOMATIC DETECTION OF A MECHANICALLY COMMUTATED DC MOTOR

DÉTECTION AUTOMATIQUE D'UN MOTEUR À COURANT CONTINU COMMUTÉ MÉCANIQUEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.03.2009 DE 102009013063**

(43) Veröffentlichungstag der Anmeldung:
**25.01.2012 Patentblatt 2012/04**

(73) Patentinhaber: **Brose Fahrzeugteile GmbH & Co. Kommanditgesellschaft, Hallstadt**
**96103 Hallstadt (DE)**

(72) Erfinder:
• **UEBEL, Wolfgang**
  **96479 Weitramsdorf (DE)**
• **KNEZEVIC, Jovan**
  **96047 Bamberg (DE)**

(74) Vertreter: **Tschirwitz, Christian**
**FDST Patentanwälte**
**Nordostpark 16**
**90411 Nürnberg (DE)**

(56) Entgegenhaltungen:
WO-A1-2009/013049    DE-A1- 4 135 873
US-A- 6 054 787      US-A1- 2008 298 784

**Beschreibung**

Die Erfindung bezieht sich auf ein Verfahren zur automatischen Erkennung eines mechanisch kommutierten Gleichstrommotors (Kommutatormotor). Die Erfindung bezieht sich des Weiteren auf eine Vorrichtung zur Durchführung des Verfahrens sowie auf die Verwendung eines modifizierten Kommutatormotors für das Verfahren.

Kommutatormotoren werden insbesondere als Stellmotoren im Rahmen von Stellvorrichtungen (Stellsystemen) in einem Kraftfahrzeug eingesetzt, z.B. als Antrieb eines elektrischen Fensterhebers oder einer elektrischen Sitzverstellung. Für die Steuerung und/oder Überwachung des Motors in einer solchen Stellvorrichtung wird häufig die Kenntnis von spezifischen Motorkenndaten (Gerätekonstanten) wie z.B. der Polzahl, der Lamellenteilungszahl, des Motorwiderstandes, der Motorinduktivität, des Nennstroms, der Nennspannung, etc. benötigt. Eine oder mehrere dieser Kenndaten werden insbesondere benötigt, um anhand eines Motormodells (d.h. einer das elektrische, thermische und/oder mechanische Verhalten des Motors simulierenden mathematischen Formel) die Motorstellung oder Motorbelastung oder eine sonstige Betriebsgröße des Motors zu berechnen. Die jeweils benötigten Motorkenndaten sind üblicherweise softwaretechnisch in einer Steuereinheit des Stellsystems hinterlegt.

Die Abhängigkeit von Steuer- und Überwachungsprozessen von motorspezifischen Kenndaten behindert nachteiligerweise den Austausch des einer Stellvorrichtung zugeordneten Motors, z.B. gegen einen Motor anderer Leistung oder gegen einen Motor eines anderen Herstellers, zumal bei Austausch des Motors in aller Regel die der Stellvorrichtung zugeordnete Steuereinheit auf die neuen Motorkenndaten umprogrammiert werden muss. Eine einfache und flexible Austauschfähigkeit von Motoren ist aber andererseits bei Kraftfahrzeugstellvorrichtungen in höchstem Maße wünschenswert, z.B. um solche Stellvorrichtungen einfach an unterschiedliche Einsatzzwecke, insbesondere verschiedene Fahrzeugtypen anpassen zu können.

Der Erfindung liegt die Aufgabe zugrunde, einen flexiblen und einfachen Austausch eines Kommutatormotors bei einer Kraftfahrzeugstellvorrichtung zur ermöglichen.

Die Aufgabe wird erfindungsgemäß gelöst durch ein Verfahren mit den Merkmalen des Anspruchs 1 zur automatischen Erkennung des Motors hinsichtlich des Motortyps, dem er angehört.

Die Erfindung beruht allgemein auf der Idee, die zum Einsatz in solchen Stellvorrichtungen vorgesehenen Kommutatormotoren durch mechanische und/oder elektromechanische Modifikation derart zu kodieren, dass jeder Motortyp anhand der Charakteristik der von ihm erzeugten Stromrippel identifizierbar ist. Als (Motorstrom-)Rippel wird hierbei eine charakteristische Welligkeit (d.h. periodische, pulsartige Schwankungen) des Motorstroms bezeichnet, die durch die Kommutierung des Gleichstrommotors hervorgerufen wird.

Verfahrensgemäß werden eine elektrische Motorgröße erfasst, und Stromrippel im zeitlichen Verlauf dieser Motorgröße erkannt. Weiterhin werden die Amplitude, Dauer und/oder zeitliche Stellung der erkannten Rippel ausgewertet und mit vorbekannten Rippelmustern verglichen. Dabei werden aus einer vorbekannten Kenndatentabelle die einem bestimmten Motortyp zugeordneten Kenndaten ausgewählt, wenn die Amplitude, Dauer und/oder zeitliche Stellung der erkannten Rippel (nach Maßgabe vorgegebener Kriterien) mit einem Rippelmuster übereinstimmen, das diesem Motortyp zugeordnet ist.

Im Rahmen der Erfindung nutzbare Varianten zur Modifizierung eines Kommutatormotors und entsprechende Beeinflussung seines Rippelmusters sind (in anderem Zusammenhang) in DE 41 35 873 C2 beschrieben, auf die in diesem Sinne vollumfänglich Bezug genommen wird. Bevorzugt erfolgt die Modifikation im Rahmen der Erfindung aber dadurch, dass eine oder mehrere Spulen des Motors mit geringfügig geringerer oder höherer Windungszahl gewickelt werden als die übrigen Spulen. Bei vierspuligen Motoren mit standardmäßig 25 Windungen pro Spule könnten beispielsweise u.a. folgende Windungszahlverhältnisse zur Kodierung von unterschiedlichen Motortypen herangezogen werden:

Tab. 1

| Motortyp | Kodierungsschema | Windungszahlverhältnis |
|---|---|---|
| A | 1:0:0:0 | 27:25:25:25 |
| B | -1:0:0:0 | 23:25:25:25 |
| C | 1:-1:0:0 | 27:23:25:25 |
| D | 1:1:0:0 | 27:27:25:25 |
| E | 1:0:1:0 | 27:25:27:25 |
| ... | ... | ... |

Die Kodierung des Typs -1:0:0:0 wird alternativ auch durch einen achtspuligen Motor mit einem vorteilhaften Windungsverhältnis von 26: 24:25:25:27:26:25:25 erzielt. Hier wiederholt sich das Rippelmuster mit jedem Motorhalbzyklus.

Bei der erfassten Motorgröße handelt es sich bevorzugt um die gegen-elektromotorische Kraft (auch als Back Electromagnetic Force, kurz: b-EMF oder Gegeninduktionsspannung bezeichnet), die im Betrieb des Motors erzeugt wird. Die b-EMF wird bevorzugt anhand des gemessenen Motorstroms und der gemessenen Motorspannung aus einem vorgegebenen Motormodell berechnet.

Bei dem verfahrensgemäß verwendeten Motormodell handelt es sich um eine mathematische Formel, insbesondere der Form

$$E = U_m - R_a \cdot I_a - L_a \cdot \frac{dI_a}{dt} \, , \qquad \text{Glg. 1}$$

bzw. um ein diese Formel implementierendes Schaltungs- oder Programmmodul. In Glg. 1 bezeichnen

- E die in Einheiten einer elektrischen Spannung gemessene gegen-elektromotorische Kraft (b-EMF),
- $U_m$ die an den Motorkontakten anliegende Motorspannung,
- $R_a$ den ohmsche Motorwiderstand,
- $i_a$ den zwischen den Motorkontakten fließenden elektrischen Motorstrom, genauer die Stromstärke desselben, und
- $L_a$ die Induktivität des Motors.

Bei den Größen E, Um und $I_a$ handelt es sich um zeitabhängige Messgrößen, d.h. um Funktionen der Zeit. Bei den Größen $R_a$ und $L_a$ handelt es sich um Konstanten, die für die Durchführung des vorstehend beschriebenen Verfahrens mit vorgegebenen Standardwerten belegt sind (Der tatsächliche Motorwiderstand und die tatsächliche Induktivität sind als motorspezifische Kenndaten erst nach der Motorerkennung, mithin erst nach der Durchführung des vorstehend beschriebenen Verfahrens bekannt).

Bei der erfassten Motorgröße kann es sich ferner aber auch um den Motorstrom (genauer die Stromstärke desselben) oder um die Motorspannung, bevorzugt den Selbstinduktionsanteil derselben handeln.

In der Kenndatentabelle sind bevorzugt Kenndaten zu mindestens zwei - bevorzugt aber zu wesentlich mehr - unterschiedlichen Motortypen hinterlegt, wobei zu jedem dieser Motortypen zusätzlich Identifizierungsangaben zu einem dem Motortyp als Kodierung zugeordneten Rippelmuster hinterlegt sind. Diese Angaben sind insbesondere in Form von Schwellwerten hinterlegt. Beispielsweise sind zu dem - im obigen Beispiel dem Motortyp B zugeordneten - Kodierungsschema -1:0:0:0 als Identifizierungsangaben hinterlegt,

- dass jeder vierte Rippel eine einen ersten Schwellwert S1 unterschreitende Amplitude aufweist, und
- dass die Amplituden der übrigen Rippel in einem zwischen zwei weiteren Schwellwerten S2 und S3 aufgespannten Intervall liegen,

wobei die Schwellwerte S1, S2 und S3 unter Beachtung der Relation S1 < S2 < S3 vorgegeben sind.

Die obige Aufgabe wird weiterhin erfindungsgemäß gelöst durch eine Steuereinheit mit den Merkmalen des Anspruchs 6 zur Ansteuerung eines mechanisch kommutierten Gleichstrommotors einer Stellvorrichtung (auch: Stellsystem) für ein Kraftfahrzeug sowie durch eine Stellvorrichtung, die diese Steuereinheit sowie einen mechanisch kommutierten Gleichstrommotor umfasst (Anspruch 7). Die Steuereinheit ist hierbei - insbesondere schaltungs- oder programmtechnisch - zur automatischen Durchführung des vorstehend beschriebenen Verfahrens eingerichtet. Die Steuereinheit umfasst hierbei insbesondere

- Mittel zur Erfassung einer elektrischen Motorgröße,
- Mittel zur Ermittlung von Stromrippeln im Verlauf der Motorgröße,
- Mittel zur Auswertung der Amplitude, Dauer und/oder zeitlichen Stellung der erkannten Stromrippel und zu deren Vergleich mit vorbekannten Rippelmustern, die in eins-zu eins-Relation einer Anzahl von Motortypen zugeordnet sind,
- eine vorbekannte Kenndatentabelle, in der eine Anzahl von Kenndaten zu jedem der mehreren Motortypen enthalten sind, sowie
- Mittel zur Auswahl der einem bestimmten Motortyp zugeordneten Kenndaten aus der Kenndatentabelle, wenn die Amplitude, Dauer und/oder zeitliche Stellung der erkannten Stromrippel mit einem Rippelmuster übereinstimmen, das diesem Motortyp zugeordnet ist.

Die Steuereinheit ist in zweckmäßiger Ausführung im Wesentlichen durch einen Mikroprozessor gebildet, dem Messwerte einer oder mehrerer Motorgrößen, insbesondere des Motorstroms und der Motorspannung zugeführt sind, und in dem das Verfahren im Übrigen softwaretechnisch implementiert ist.

Die Aufgabe wird zudem erfindungsgemäß gelöst durch die Merkmale des Anspruchs 8, d.h. durch die Verwendung eines in oben beschriebener Weise modifizierten Motors zur Identifizierung eines bestimmten Motortyps, dem der Gleichstrommotor angehört, durch Erfassung und Auswertung der von dem Gleichstrommotor erzeugten Stromrippel, insbesondere nach dem erfindungsgemäßen Verfahren oder in der erfindungsgemäßen Stellvorrichtung.

Nachfolgend wird ein Ausführungsbeispiel der Erfindung anhand einer Zeichnung näher erläutert. Darin zeigen:

Fig. 1  in einem schematischen Blockschaltbild eine Stellvorrichtung für ein Kraftfahrzeug, mit einem mechanisch kommutierten Gleichstrommotor sowie mit einer Steuereinheit zur Ansteuerung des Motors, die dazu eingerichtet ist, den Motortyp des Gleichstrommotors durch Analyse der Stromrippel des Motorstroms zu identifizieren,

Fig. 2  in schematischer Darstellung den Ständer und den Läufer des Gleichstrommotors,

Fig. 3  in einem schematischen Diagramm eines Wechselanteils der gegen-elektromotorischen Kraft (b-EMF) gegen die Zeit ein Normrippelmuster des Gleichstrommotors, das infolge einer Modifikation des Gleichstrommotors pro Motorhalbzyklus einen hinsichtlich seiner Amplitude ausgezeichneten Indexrippel und drei weitere, nicht ausgezeichnete Stromrippel umfasst, und

Fig. 4  in drei gegenübergestellten Diagrammen des Wechselanteils der gegen-elektromotorischen Kraft (b-EMF) gegen die Zeit drei unterschiedliche Normrippelmuster, die zur Kodierung eines jeweils zugehörigen Motortyps vorgesehen sind.

Einander entsprechende Teile und Größen sind in allen Figuren stets mit gleichen Bezugszeichen versehen.

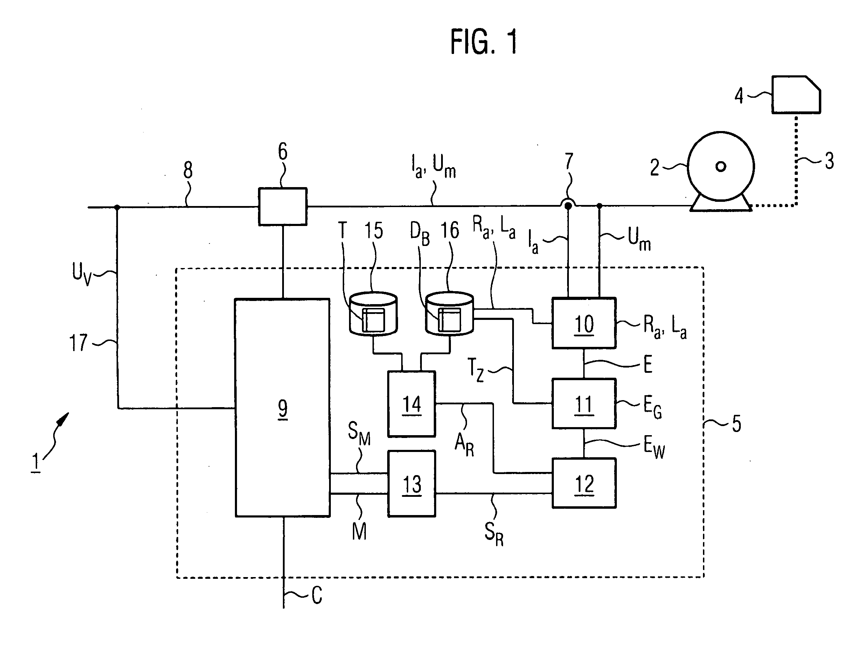

Bei der in Fig. 1 schematisch dargestellten Stellvorrichtung 1 handelt es sich beispielhaft um einen elektrischen Fensterheber, wie er üblicherweise in einem Personenkraftfahrzeug eingesetzt wird. Die Stellvorrichtung 1 umfasst einen mechanisch kommutierten (Gleichstrom-)Motor 2, der über eine (lediglich angedeutete) Stellmechanik 3 auf eine (Kraftfahrzeug-)Fensterscheibe 4 wirkt und diese reversibel zwischen einer Öffnungsstellung und einer Schließstellung verstellt.

Die Stellvorrichtung 1 umfasst weiterhin eine Steuereinheit 5, einen Motorschalter 6 sowie einen Stromsensor 7.

Der Stromschalter 6 ist in eine (zweiphasige) Stromversorgungseitung 8 für den Motor 2 geschaltet. Er umfasst zwei unabhängig ansteuerbare Einzelschalter, durch deren Schaltstellung beide Motoranschlüsse wahlweise mit dem Pluspol oder dem Minuspol (Masse) der Stromversorgungsleitung 8 verbunden werden können. Durch entsprechende Stellung der Einzelschalter des Motorschalters 6 kann somit der Motor 2 in jeder seiner beiden Laufrichtungen an- und ausgeschaltet sowie zur Umkehrung der Laufrichtung umgepolt werden.

Bei dem Stromsensor 7 handelt es sich insbesondere um einen Messwiderstand, über dem eine stromproportionale Spannung als Messsignal für den in der Stromversorgungsleitung 8 fließenden Motorstrom $I_a$ abgreifbar ist. Dieses Messsignal ist vereinfachend im Folgenden ebenfalls als Motorstrom $I_a$ bezeichnet, zumal es ein Maß für die Stärke des letzeren darstellt. Der Stromsensor 7 führt in diesem Sinne den Motorstrom $I_a$, genauer das für den Motorstrom $I_a$ charakteristische Messsignal der Steuereinheit 5 als Eingangsgröße zu. Als weitere Eingangsgröße (im Sinne einer Messgröße) ist der Steuereinheit 5 die in der Stromversorgungsleitung 8 anliegende Motorspannung Um zugeführt.

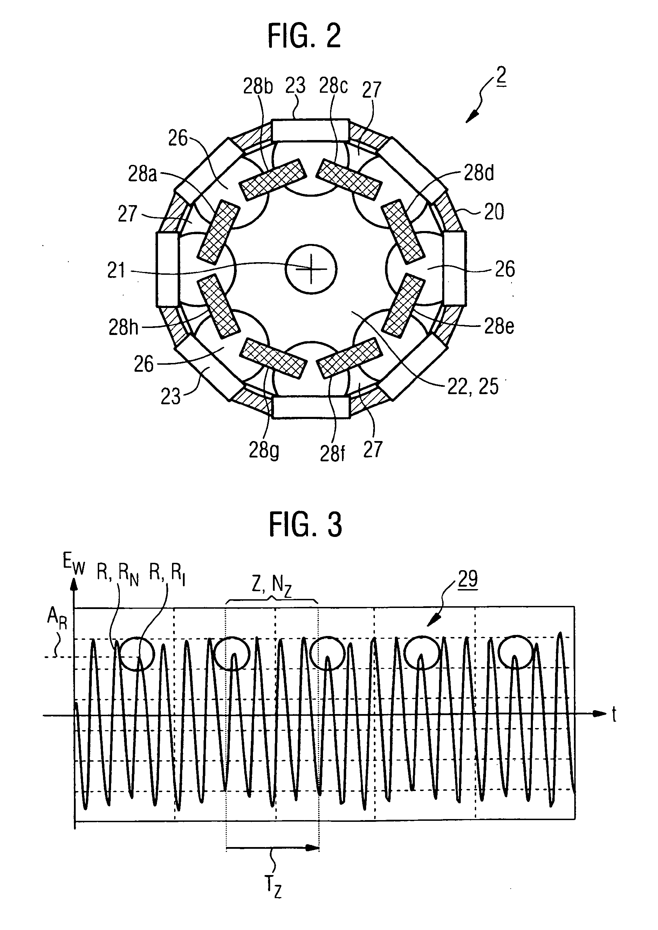

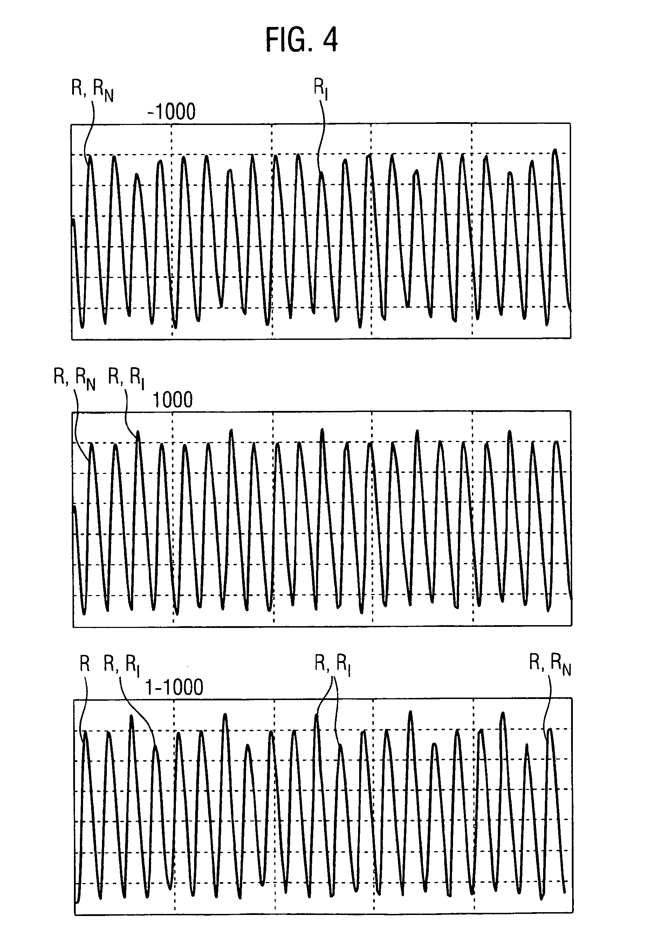

Die Steuereinheit 5 dient zur Steuerung des Motors 2 durch entsprechende Beschaltung des Motorschalters 6. Sie umfasst hierzu ein Schaltmodul 9, das in Abhängigkeit externer Steuerbefehle C sowie in Abhängigkeit eines Motorstellungssignals M den Motorschalter 6 betätigt. Bei dem Motorstellungssignal M handelt es sich um eine - grundsätzlich beliebig definierbare - Stellgröße, aus der die Position der Fensterscheibe 4 ableitbar ist. Das Motorstellungssignal M kann hierbei insbesondere als Drehwinkel des Motors 2 (in Einheiten des Winkelmaßes) definiert sein. In bevorzugter Ausbildung der Vorrichtung 1 wird das Motorstellungssignal M aber als dimensionslose Zahl erzeugt, die sich in nachfolgend näher beschriebener Weise aus der Auszählung von Stromrippeln R (Fig. 3 und 4) des Motorstroms $I_a$ ergibt.

Zur Bestimmung des Motorstellungssignals M umfasst die Steuereinheit 5 ein so genanntes Motormodell 10, einen (Wechselanteils-)Filter 11, ein (Stromrippel-) Erkennungsmodul 12 und ein Auswertungsmodul 13. Die Steuereinheit 5 umfasst weiterhin ein Motorerkennungsmodul 14, eine Kenndatenbank 15 sowie einen Betriebsdatenspeicher 16. Der Steuereinheit 5 ist außerdem über eine Zweigleitung 17 aus der Stromversorgungsleitung 8 eine elektrische Versorgungsspannung $U_v$ zugeführt.

Die Steuereinheit 5 ist in bevorzugter Ausbildung der Stellvorrichtung 1 durch einen Mikrocontroller gebildet. Das Schaltmodul 9, das Motormodell 10, der Filter 11 und die Module 12 bis 14 sind hierbei insbesondere in Form von Software-Bausteinen, d.h. funktionalen Bestandteilen einer in dem Mikrocontroller implementierten Software realisiert. Alternativ kann die Steuereinheit 5 aber auch zumindest teilweise in Form einer analogen und/oder digitalen elektrischen Schaltung realisiert sein, wobei das Schaltmodul 9, das Motormodell 10, der Filter 11 und die Module 12 bis 14 in Form von elektrischen Schaltkreisen realisiert sind. Des Weiteren sind Mischformen denkbar, bei denen mehrere der Bestandteile der Steuereinheit 5 teils schaltungstechnisch, und andernteils softwaretechnisch realisiert sind.

Die vorstehende Gliederung der Bestandteile der Steuereinheit 5 hat zudem lediglich funktionalen Charakter. Diese Bestandteile können insbesondere beliebig zu größeren Schaltungs- oder Programmeinheiten zusammengefasst oder noch feiner untergliedert sein. Bei der Kenndatenbank 15 und dem Betriebsdatenspeicher 16 handelt es sich analog um funktional verschiedene Speicherstrukturen, die - hardwareseitig - wahlweise in getrennten Speicherbausteinen oder einer gemeinsamen Speicherhardware implementiert sein können.

In dem Motormodell 10 ist - programm- oder schaltungstechnisch - eine mathematische Formel der in Glg. 1 angegebenen Form implementiert, durch die die eingangs bereits eingeführte gegen-elektromotorische Kraft (b-EMF) E als Funktion des Motorstroms $I_a$ und der Motorspannung Um berechenbar ist. Der Motorstrom $I_a$ und die Motorspannung Um sind dem Motormodell 10 als Eingangsgrößen zugeführt. Die Parameter des Motormodells 10, nämlich der ohmsche (Motor-) Widerstand $R_a$, und die (Motor-)Induktivität $L_a$ sind dem Motormodell 10 als Konstanten vorgegeben. Die nach Glg. 1 berechnete elektromotorische Kraft E wird von dem Motormodell 10 an den nachrieschalteten Filter 11 abgegeben.

Der zeitabhängige variierende Wert der b-EMF E setzt sich additiv zusammen aus einem zeitlich nicht oder nur schwach veränderlichen Gleichanteil $E_G$ und einem zeitlich schnell veränderlichen Wechselanteil $E_W$:

$$E_W = E - E_G \qquad \text{Glg. 2}$$

Als zeitlich nicht oder schwach veränderlich wird hierbei insbesondere derjenige Anteil der b-EMF E definiert, der sich auf der typischen Zeitskala eines (Motor-)Halbzyklus Z (Fig. 3), d.h. einer 180°-Drehung des Motors 2, nicht signifikant ändert. In programmtechnischer Ausbildung ist der Filter 11 vorzugsweise durch einen Algorithmus gebildet, der den Gleichanteil $E_G$ durch zeitlich gleitende Mittelwertbildung über die b-EMF E für die Dauer eines Halbzyklus Z (Halbzyklusdauer $T_Z$) ermittelt, insbesondere gemäß

$$E_G = \frac{1}{T_Z} \cdot \int_{T_Z} E \cdot dt , \qquad \text{Glg. 3}$$

und der den Wechselanteil $E_W$ nach Glg. 2 durch Substraktion des Gleichanteils $E_G$ von der b-EMF E berechnet. Den ermittelten Wechselanteil $E_W$ leitet der Filter 11 an das Stromrippelerkennungsmodul 12 weiter.

Die Halbzyklusdauer $T_Z$ kann hierbei von der Steuereinheit 5 aus der zeitlichen Änderung des Motorstellungssignals M berechnet und dem Filter 11 mit jeweils aktuellem Betrag zugeführt werden. In aus der Einfachheit halber bevorzugter Ausbildung ist die Halbzyklusdauer $T_Z$ dem Filter 11 aber als Konstante fest vorgegeben. Diese Konstante ist hierbei insbesondere derart gewählt, dass ihr Wert der durchschnittlichen Halbzyklusdauer $T_Z$ des Motors 2 in dessen stationärem Betrieb entspricht.

In schaltungstechnischer Ausbildung kann der Filter 11 alternativ als Hochpass ausgebildet sein.

Erkanntermaßen äußern sich Stromrippel R des Motorstroms $I_a$ in einer hierzu synchronen Oszillation der b-EMF E, und insbesondere deren Wechselanteil $E_W$. Das Erkennungsmodul 12 ist deshalb daher ausgebildet, Maxima im zeitlichen Verlauf des Wechselanteils $E_W$ als Indiz für das Auftreten eines Stromrippels R zu erkennen. Um eine Fehlerkennung von Stromrippeln R durch hochfrequente Störungen im Verlauf des Wechselanteils $E_W$ bestmöglich zu vermeiden, wird der Wechselanteil $E_W$ vor der Maximalwertsuche optional geglättet.

Bei Erkennung eines jeden Maximums im Wechselanteil $E_W$ gibt das Erkennungsmodul 12 ein Rippelerkennungssignal $S_R$ an das Auswertungsmodul 13 ab. Zudem ermittelt das Erkennungsmodul 12 den Betrag des Wechselanteils $E_W$ an der Stelle des Maximums und übermittelt diesen Betrag als Rippelamplitude $A_R$ an das Motorerkennungsmodul 14 ab.

Das Auswertungsmodul 13 erhöht (inkrementiert) oder erniedrigt (dekrementiert) jeweils bei Empfang des Rippelerkennungssignals $S_R$ das Motorstellungssignal M - je nach Wert eines von dem Schaltmodul 9 zugeführten Motorstatussignals $S_M$ - gemäß

$$M = \sum_{S_R} S_M + M_0 \qquad \text{Glg. 5}$$

um eine Zähleinheit. Die Rippelerkennungssignale $S_R$ wirken somit als Zählpulse für die Inkrementierung bzw. Dekrementierung des Motorstellungssignals M. Das Auswertungsmodul 13 geht dabei von einem Anfangswert $M_0$ des Mo- torstellungssignals M aus, aus dem die Motorstellung und die Fensterstellung zu Beginn des Stellvorgangs ableitbar sind. Das Motorstatussignal $S_M$ hat den Wert +1, solange der Motor 2 in einer ersten Laufrichtung betrieben wird, und den Wert -1, solange der Motor 2 in der entgegengesetzten Laufrichtung betrieben wird. Bei ausgeschaltetem Motor 2 hat das Motorstatussignal $S_M$ dagegen den Wert 0.

Wie aus Fig. 2 hervorgeht, umfasst der Motor 2 einen Ständer 20 und einen in diesem um eine Motorachse 21 rotierbar gelagerten Läufer 22. Der Ständer 20 besteht aus einem im Wesentlichen hohlzylindrischen Blechpaket mit acht um dessen Innenumfang gleichmäßig verteilten Permanentmagneten 23. Der Läufer 21 umfasst in an sich herkömmlicher Technik einen im Querschnitt etwa sternförmigen Eisenkern 25 mit acht umfänglich gleich verteilt angebrachten Nuten 26. Zwischen je zwei benachbarten Nuten 26 ist hierbei ein Zahn 27 gebildet. Jeder der acht Zähne 27 ist mit jeweils einer - im Betrieb des Motors 2 vom Motorstrom $I_a$ durchflossenen - Ankerspule 28a-28h bewickelt. Im Unterschied zu einem gewöhnlichen Gleichstrommotor ist der Motor 2 mit einer gebrochenen Ankerwicklung versehen, d.h. die Ankerspulen 28a-28h haben eine ungleiche Windungszahl. In dem in Fig. 2 dargestellten Beispiel haben

- die Spule 28a die Windungszahl 26,
- die Spule 28b die Windungszahl 24,
- die Spulen 28c und 28d jeweils die Windungszahl 25,
- die Spule 28e die Windungszahl 27,
- die Spule 28f die Windungszahl 26, und
- die Spulen 28g und 28h jeweils die Windungszahl 25.

Durch die solchermaßen gebrochene Ankerwicklung wird im ungestörten, statischen Betrieb des Motors 2 ein Normrippelmuster 29 erzeugt, das in Fig. 3 anhand des Verlaufs des Wechselanteils $E_w$ der b-EMF E gegen die Zeit t dargestellt ist. Aus der Fig. 3 ist erkennbar, dass das Normrippelmuster 29 jeweils insgesamt vier Stromrippel R pro Halbzyklus Z, also pro 180°-Drehung des Läufers 23, aufweist. Die Anzahl der Stromrippel R pro Halbzyklus Z ist nachfolgend als "Zyklusrippelzahl $N_Z$" (hier: $N_Z = 4$) bezeichnet. Drei Stromrippel R innerhalb jedes Halbzyklus Z weisen hierbei - entsprechend des jeweiligen Maximalwerts des Wechselanteils $E_W$ - eine zumindest näherungsweise gleiche Rippelamplitude $A_R$ auf.

Diese Stromrippel R sind nachfolgend auch als "nicht ausgezeichnete" Stromrippel $R_N$ bezeichnet. Der in jedem Halbzyklus Z verbleibende vierte Stromrippel R - " in Fig. 3 durch Kreise optisch hervorgehoben - weist dagegen jeweils eine im Vergleich zu den übrigen Stromrippeln R signifikant erniedrigte Rippelamplitude $A_R$ auf. Diester (kleinere) Stromrippel R ist somit gegenüber den Stromrippel $R_N$ ausgezeichnet und ist nachfolgend als Indexrippel $R_1$ bezeichnet. Das Normrippelmuster 29 entspricht somit der eingangs beschriebenen Kodierung -1:0:0:0. Wie aus Fig. 3 erkennbar, wiederholt sich das Normrippelmuster 29 im ungestörten stationären Betrieb des Motors 2 mit jedem Halbzyklus Z.

Im Normalbetrieb der Stellvorrichtung 1 sind der Motorwiderstand $R_a$, die Motorinduktivität $L_a$, und die typische Halbzyklusdauer $T_Z$ des Motors 2 in dem Betriebsdatenspeicher 16 hinterlegt und werden hieraus dem Motormodell 10 bzw. dem Filter 11 zur Verfügung gestellt. In dem Betriebsdatenspeicher 16 sind zudem weitere Kenndaten (d.h. konkrete Werte für weitere Kenngrößen) des Motors 2, insbesondere die Zahl der Nuten 26 bzw. Zähne 27, die Polzahl, der Lamellenteilungswinkel, die Nennspannung, der Nennstrom, etc. hinterlegt. Die jeweils benötigten Kenndaten des im Rahmen der Stellvorrichtung 1 eingesetzten Motors 2 - übergreifend als Betriebsdaten $D_B$ bezeichnet - werden im Normalbetrieb der Stellvorrichtung 1 deren Bestandteilen, insbesondere dem Motormodell 10 und dem Filter 11 sowie (in nicht explizit dargestellter Weise) dem Auswertungsmodul 13 und dem Schaltmodul 9 aus dem Betriebsdatenspeicher 16 zur Verfügung gestellt.

Die Betriebsdaten $D_B$ sind in dem Betriebsdatenspeicher 16 aber lediglich nichtresistiv (flüchtig) gespeichert. Sie werden somit gelöscht, wenn die Steuereinheit 5 von der Zweigleitung 17, und somit von der Versorgungsspannung $U_v$ abgeklemmt wird. Ebenso enthält der Betriebsspeicher 16 auch vor der erstmaligen Inbetriebnahme der Stellvorrichtung 1 noch keine Betriebsdaten $D_B$.

Bei der erstmaligen Inbetriebnahme der Stellvorrichtung 1 oder nach Wiederaufnahme des Betriebs nach einem Ausfall der Versorgungsspannung $U_v$ wird vielmehr - z.B. durch das Motorerkennungsmodul 14 - ein Satz von Standard-Kenndaten $D_S$ aus der Kenndatenbank 16 in den Betriebsdatenspeicher 16 übertragen. In der Kenndatenbank 15 sind die Standard-Kenndaten $D_S$ resistiv (nichtflüchtig) hinterlegt, so dass sie auch einen Ausfall der Versorgungsspannung $U_v$ überdauern.

Die Standard-Kenndaten $D_S$ enthalten Standardwerte für den Motorwiderstand $R_a$, die Motorinduktivität $L_a$ und die typische Halbzyklusdauer $T_Z$ sowie die übrigen Kenngrößen, die für die Gesamtheit der im Rahmen der Stellvorrichtung 1 grundsätzlich einsetzbaren Motortypen, bestmöglich geeignet sind. Insbesondere enthalten die Standard-Kenndaten $D_S$ Durchschnittswerte oder - insbesondere bei überlastkritischen Kenngrößen wie der Nennspannung und dem Nennstrom - allgemeinverträgliche Minimalwerte für die Kenngrößen.

In der Regel weichen die Standard-Kenndaten $D_S$ deshalb von den spezifischen Gerätekonstanten des tatsächlich im Rahmen der Stellvorrichtung 1 eingesetzten Motors 2 mehr oder weniger stark ab.

Das Motorerkennungsmodul 14 führt deshalb beim ersten Anfahren des Motors 1 nach der erstmaligen oder - nach einem Ausfall der Versorgungsspannung Uv - erneuten Inbetriebnahme der Stellvorrichtung 1 ein nachfolgend näher beschriebenes Verfahren zur Motorerkennung durch.

Das Motorerkennungsmodul 14 greift hierzu auf eine in der Kenndatenbank 15 - ebenfalls resistiv - hinterlegte Kenndatentabelle T zurück, die für eine Vielzahl von unterschiedlichen Motortypen jeweils einen Satz spezifischer Kenndaten, insbesondere konkrete Werte für den Motorwiderstand $R_a$, die Motorinduktivität $L_a$, und die typische Halb-zyklusdauer $T_Z$, enthält.

Für jeden dieser Motortypen enthält die Kenndatenbank 15 Angaben zu einem zugeordneten Normrippelmuster. Die Normrippelmuster aller in der Kenndatenbank 15 hinterlegten Motortypen sind dabei voneinander stets verschieden. Jeder Motortyp ist hierdurch durch das ihm zugeordnete Normrippelmuster kodiert und eindeutig identifizierbar.

Fig. 4 zeigt beispielhaft drei jeweils einem bestimmten Motortyp zugeordnete Normrippelmuster mit den Kodierungen

- -1,0,0,0 (drei nicht-ausgezeichnete Stromrippel $R_N$, gefolgt von einem demgegenüber kleineren Indexrippel $R_1$ des Typs "-1"),
- 1,0,0,0 (drei nicht-ausgezeichnete Stromrippel $R_N$, gefolgt von einem demgegenüber größeren Indexrippel $R_1$ des Typs "1") und
- 1,-1,0,0 (zwei nicht-ausgezeichnete Stromrippel $R_N$, gefolgt von einem ersten Indexrippel $R_1$ des Typs "1" und einem zweiten Indexrippel $R_1$ des Typs"-1 ")

Für jeden Motortyp und somit jedes zugeordnete Rippelmuster enthält die Kenndatentabelle T als Identifizierungsangaben Schwellwertbedingungen, die die Stromrippel $R_N$, $R_1$ des jeweiligen Rippelmusters erfüllen müssen. Beispielsweise enthält die Kenndatentabelle T zur Identifizierung der in Fig. 4 dargestellten Normrippelmuster die in Tab.2 enthalten Angaben:

Tab. 2

| Motortyp | Kodierung | Bedingung für Rippelerkennung | Kenndaten |
|---|---|---|---|
| A | 1:0:0:0 | "1": $A_R > S_2$ <br> "0": $S_1 < A_R < S_2$ | ........ |
| B | -1:0:0:0 | "-1": $A_R < S_1$ <br> "0": $S_1 < A_R < S_2$ | ........ |
| C | 1:-1:00 | "1": $A_R > S_2$ <br> "-1": $A_R < S_1$ <br> "0": $S_1 < A_R < S_2$ | ........ |
| ........ | ........ | ......... | ........ |

Die Schwellwerte sind hier, z.B. durch empirische Versuche, unter der Bedingung $S_1 < S_2$ geeignet zu bestim-men. Beispielsweise sind $S_1$ und $S_2$ derart gewählt, dass ihr jeweiliger Wert 90% bzw. 110% der durchschnittlichen Rippelamplitude $A_R$ eines nicht-ausgezeichneten Stromrippels $R_N$ beträgt.

Zur Motorerkennung prüft das Motorerkennungsmodul 14 anhand der empfangenen Rippelamplituden $A_R$ für jeden hinterlegten Motortyp die Bedingungen für die Identifizierung der einzelnen Stromrippel R des zugeordneten Rippelmusters in einer Bedingungskette. Sobald das Motorerkennungsmodul 14 hierbei das Rippelmuster des Motors 2 mit einem der hinterlegten Rippelmuster identifiziert hat, bricht das Motorerkennungsmodul 14 die Erkennungsroutine ab und überträgt diejenigen Kenndaten, die in der Kenndatentabelle T zu diesem Rippelmuster als zugehörig hiterlegt sind, als neue Betriebsdaten $D_B$ in den Betriebsdatenspeicher 16, worauf die Stellvorrichtung 1 in den Normalbetrieb übergeht.

Im dargestellten Beispiel prüft das Motorerkennungsmodul 14 konkret in einem ersten Schritt, ob das Normrippelmuster des Motors 2 dem an erster Stelle hinterlegten Normrippelmuster 1:0:0:0 des Motortyps "A" entspricht. Es prüft entsprechend, ob eine der empfangenen Rippelamplituden $A_R$ den Schwellwert $S_2$ überschreitet.

Das Motorerkennungsmodul 14 prüft zur Vermeidung von Fehlern mehrere, insbesondere drei Halbzyklen, insgesamt also die Rippelamplituden $A_R$ von zwölf erkannten Stromrippeln R. Falls hierbei kein Indexrippel des Typs "1" erkannt wird, geht das Motorerkennungsmodul 14 zur Prüfung des dem Motortyp "B" entsprechenden Normrippelmuster -1:0:0:0 über.

Es prüft zur Erkennung des Indexrippels $R_I$ des Typs "-1" hierbei zunächst, ob eine der empfangenen Rippelamplituden $A_R$ den Schwellwert $S_1$ unterschreitet.

Sobald eine empfangene Rippelamplitude $A_R$ diese Bedingung erfüllt, prüft das Motorerkennungsmodul 14 zur Erkennung der Stromrippel $R_N$ des Typs "0", ob die drei darauffolgend empfangenen Rippelamplituden $A_R$ die Bedingung $S_1 < A_R < S_2$ erfüllen. Wenn auch dies der Fall ist, bricht das Motorerkennungsmodul 14 die Erkennungsroutine ab, ordnet den Motor 2 dem Motortyp "B" zu und überträgt die zugehörigen Kenndaten aus der Kenndatentabelle T als neue Betriebsdaten $D_B$ in den Betriebsdatenspeicher 16.

Sofern das Motorerkennungsmodul 14 den Motor 2 keinem der hinterlegten Motortypen zuordnen kann, wird die Stellvorrichtung 1 mit den Standard-Kenndaten $D_S$ betrieben.

Bezugszeichenliste

| | |
|---|---|
| 1 | Stellvorrichtung |
| 2 | (Gleichstrom-)Motor |
| 3 | Stellmechanik |
| 4 | (Kraftfahrzeug-)Fensterscheibe |
| 5 | Steuereinheit |
| 6 | Motorschalter |
| 7 | Stromsensor |
| 8 | Stromversorgungsleitung |
| 9 | Schaltmodul |
| 10 | Motormodell |
| 11 | (Wechselanteils-)Filter |
| 12 | (Stromrippel-)Erkennungsmodul |
| 13 | Auswertungsmodul |
| 14 | Motorerkennungsmodul |
| 15 | Kenndatenbank |
| 16 | Betriebsdatenspeicher |
| 17 | Zweigleitung |
| 20 | Ständer |
| 21 | Motorachse |
| 22 | Läufer |
| 23 | Permanentmagnet |
| 25 | Eisenkern |
| 26 | Nut |
| 27 | Zahn |
| 28a-h | Ankerspule |
| 29 | Normrippelmuster |

| | |
|---|---|
| t | Zeit |
| $A_R$ | Rippelamplitude |
| C | Steuerbefehl |
| $D_B$ | Betriebsdaten |
| $D_S$ | Standard-Kenndaten |
| E | gegen-elektromotorische Kraft (b-EMF) |
| $E_G$ | Gleichanteil (der b-EMF) |
| $E_W$ | Wechselanteil (der b-EMF) |
| $I_a$ | Motorstrom |
| $L_a$ | (Motor-)Induktivität |
| M | Motorstellungssignal |
| $N_Z$ | Zyklusrippelzahl |
| R | Stromrippel |
| $R_a$ | (Motor-)Widerstand |

(fortgesetzt)

| | |
|---|---|
| $R_I$ | Indexrippel |
| $R_N$ | (nicht ausgezeichneter) Stromrippel |
| $S_M$ | Motorstatussignal |
| $S_R$ | Rippelerkennungssignal |
| T | Kenndatenbank |
| $T_Z$ | Halbzyklusdauer |
| Um | Motorspannung |
| $U_V$ | Versorgungsspannung |
| Z | (Motor-)Halbzyklus |

**Patentansprüche**

1. Verfahren zur automatischen Erkennung eines mechanisch kommutierten Gleichstrommotors (2),

   • bei welchem eine elektrische Motorgröße ($E_w$) erfasst wird,
   • bei welchem Stromrippel (R) im Verlauf dieser Motorgröße ($E_w$) ermittelt werden,
   • bei welchem die Amplitude ($A_R$), Dauer und/oder zeitliche Stellung der erkannten Stromrippel (R) ausgewertet und mit vorbekannten Rippelmustern verglichen werden, und
   • bei welchem aus einer vorbekannten Kenndatentabelle (T) eine Anzahl von einem bestimmten Motortyp zugeordneten Kenndaten ausgewählt werden, wenn die Amplitude ($A_R$), Dauer und/oder zeitliche Stellung der erkannten Stromrippel (R) mit einem Rippelmuster übereinstimmen, das diesem Motortyp zugeordnet ist.

2. Verfahren nach Anspruch 1,
   bei welchem als Motorgröße die gegen-elektromotorische Kraft (E) oder eine daraus abgeleitete Größe ($E_w$) herangezogen werden.

3. Verfahren nach Anspruch 2,
   wobei die gegen-elektromotorische Kraft (E) anhand des gemessenen Motorstroms ($I_a$) und der gemessenen Motorspannung ($U_m$) mittels eines Motormodells (10) berechnet wird.

4. Verfahren nach Anspruch 2 oder 3,
   bei welchem als Motorgröße zur Ermittlung der Stromrippel (R) ein Wechselanteil ($E_w$) der gegen-elektromotorischen Kraft (E) herangezogen wird.

5. Verfahren nach einem der Ansprüche 1 bis 4,
   wobei die Übereinstimmung der erkannten Stromrippel (R) mit einem Rippelmuster anhand eines Vergleichs der Amplitude ($A_R$), Dauer und/oder zeitlichen Stellung der erkannten Stromrippel (R) mit in der Kenndatentabelle (T) zu diesem Rippelmuster hinterlegten Schwellwerten geprüft wird.

6. Steuereinheit (5) zur Ansteuerung eines mechanisch kommutierten Gleichstrommotors (2) einer Stellvorrichtung (1) für ein Kraftfahrzeug, welche Steuereinheit (5) zur Ausführung des Verfahrens nach einem der Ansprüche 1 bis 5 eingerichtet ist.

7. Stellvorrichtung (1) für ein Kraftfahrzeug, mit einem mechanisch kommutierten Gleichstrommotor (2) und mit einer Steuereinheit (5) nach Anspruch 6.

8. Verwendung eines mechanisch kommutierten Gleichstrommotors (2), der durch mechanische und/oder elektromechanische Modifikation derart kodiert ist, dass der ein charakteristisches Stromrippelmuster (29) aufweist, zur Identifizierung eines bestimmten Motortyps, dem der Gleichstrommotor (2) angehört, durch Erfassung und Auswertung der von dem Gleichstrommotor (2) erzeugten Stromrippel (R), insbesondere mittels des Verfahrens nach einem der Ansprüche 1 bis 5.

**Claims**

1. Method for the automatic detection of a mechanically commutated direct current motor (2),

   - wherein an electrical motor size ($E_w$) is detected,
   - wherein current ripples (R) in the development of this motor size ($E_w$) are determined,
   - wherein the amplitude ($A_R$), duration and/or position in time of the current ripples (R) that have been detected are evaluated and compared with hitherto known ripple patterns, and
   - wherein a number of parameters assigned to a specific motor type are selected from a hitherto known parameter table (T), when the amplitude ($A_R$), duration and/or position in time of the detected current ripples (R) match a ripple pattern that is assigned to this motor type.

2. Method according to claim 1,
   wherein a back electromotive force (E) or a size ($E_w$) derived therefrom are used as the motor size.

3. Method according to claim 2,
   wherein the back electromotive force (E) is calculated using the measured motor current ($I_a$) and the measured motor voltage ($U_m$) is calculated by means of a motor model (10).

4. Method according to claim 2 or 3,
   wherein an alternating component ($E_w$) of the back electromotive force (E) is used as the motor size for determining the current ripples (R).

5. Method according to one of claims 1 to 4,
   wherein the matching of the detected current ripples (R) with a ripple pattern is checked by comparing the amplitude ($A_R$), duration and/or position in time of the detected current ripples (R) with threshold values stored for this ripple pattern in the parameter table (T).

6. Control unit (5) for activating a mechanically commutated direct current motor (2) of an actuating device (1) for a motor vehicle, said control unit (5) being configured to carry out the method according to one of claims 1 to 5.

7. Actuating device (1) for a motor vehicle, having a mechanically commutated direct current motor (2) and having a control unit (5) according to claim 6.

8. Use of a mechanically commutated direct current motor (2), which is coded by mechanical and/or electromechanical modification in such a way that it has a single characteristic current ripple pattern (29) for identifying a specific motor type, to which the direct current motor (2) belongs, by detecting and evaluating the current ripples (R) generated by the direct current motor (2), in particular by means of the method according to one of claims 1 to 5.

**Revendications**

1. Procédé de détection automatique d'un moteur à courant continu (2) commuté mécaniquement,

   • d'après lequel on relève une grandeur de moteur ($E_w$) électrique,
   • d'après lequel on détermine des ondulations de courant (R) au cours de la loi de variation de cette grandeur de moteur ($E_W$),
   • d'après lequel l'amplitude ($A_R$), la durée et/ou la localisation temporelle des ondulations de courant (R) ayant été détectées, sont traitées et comparées à des modèles d'ondulations connus au préalable, et
   • d'après lequel on sélectionne dans un tableau de données caractéristiques (T) connu au préalable, un certain nombre de données caractéristiques associées à un type de moteur déterminé, lorsque l'amplitude ($A_R$), la durée et/ou la localisation temporelle des ondulations de courant (R) ayant été détectées concordent avec un modèle d'ondulations, qui est associé à ce type de moteur.

2. Procédé selon la revendication 1,
   d'après lequel en guise de grandeur de moteur, on utilise la force contre-électromotrice (E) ou une grandeur ($E_w$) dérivée de celle-ci.

**3.** Procédé selon la revendication 2,
d'après lequel la force contre-électromotrice (E) est calculée, au regard du courant de moteur ($I_a$) mesuré et de la tension de moteur ($U_m$) mesurée, au moyen d'un modèle de moteur (10).

**4.** Procédé selon la revendication 2 ou la revendication 3,
d'après lequel on utilise en guise de grandeur de moteur pour la détermination des ondulations de courant (R), une fraction alternative ($E_w$) de la force contre-électromotrice (E).

**5.** Procédé selon l'une des revendications 1 à 4, d'après lequel la concordance des ondulations de courant (R) ayant été détectées, avec un modèle d'ondulations, est testée à l'aide d'une comparaison de l'amplitude ($A_R$), de la durée et/ou de la localisation temporelle des ondulations de courant (R) ayant été détectées, avec des valeurs de seuil stockées dans le tableau de données caractéristiques (T) pour ce modèle d'ondulations.

**6.** Unité de commande (5) pour la commande d'un moteur à courant continu (2) commuté mécaniquement d'un dispositif de réglage (1) pour un véhicule automobile, cette unité de commande (5) étant conçue pour exécuter le procédé selon l'une des revendications 1 à 5.

**7.** Dispositif de réglage (1) pour un véhicule automobile, comprenant un moteur à courant continu (2) commuté mécaniquement et une unité de commande (5) selon la revendication 6.

**8.** Utilisation d'un moteur à courant continu (2) commuté mécaniquement, qui est codé par modification mécanique et/ou électromécanique, de façon à présenter un modèle d'ondulations de courant (29) caractéristique, pour l'identification d'un type de moteur déterminé, auquel appartient le moteur à courant continu (2), par le relevé et le traitement des ondulations de courant (R) engendrées par le moteur à courant continu (2), notamment à l'aide du procédé selon l'une des revendications 1 5.

# FIG. 1

EP 2 409 397 B1

12

# FIG. 2

# FIG. 3

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4135873 C2